# EUROPÄISCHE PATENTSCHRIFT

(11) **EP 0 499 849 B1**
(45) Veröffentlichungstag und Bekanntmachung des Hinweises auf die Patenterteilung: **01.06.1994**
(21) Anmeldenummer: 92101473.4
(22) Anmeldetag: 29.01.1992
(51) Int. Cl.: A47J 27/13

(54) **Kochgeschirrsatz**
Set of cooking vessels
Ensemble de récipients de cuisson

(30) Priorität: 19.02.1991 DE 9101938 U
(43) Veröffentlichungstag der Anmeldung: 26.08.1992
(73) Patentinhaber: WMF WÜRTTEMBERGISCHE METALLWARENFABRIK AG, 73304 Geislingen (DE)
(72) Erfinder: Krejza, Jürgen, W-7343 Kuchen (DE); Schwarz, Hermann, W-7340 Geislingen/Steige (DE)
(74) Vertreter: Grünecker, Kinkeldey, Stockmair & Schwanhäusser Anwaltssozietät

(56) Entgegenhaltungen:
- DE-A- 1 814 978
- FR-A- 986 944
- FR-A- 1 477 770
- FR-A- 2 026 206

## Beschreibung

Die Erfindung bezieht sich auf einen Kochgeschirrsatz der im Oberbegriff von Anspruch 1 erläuterten Art.

Ein derartiger Satz aus Kochgeschirren, die jeweils übereinstimmende Öffnungsweiten aufweisen, ist aus der DE-OS 18 14 978 bekannt. Kochgeschirre mit gleichen Öffnungsweiten müssen normgemäß auch etwa die gleichen Bodendurchmesser aufweisen. Der Wandungsverlauf zwischen Öffnungsweite und Boden ist somit mehr oder weniger festgelegt. Um solche Kochgeschirre zum platzsparenden Aufbewahren klemmfrei ineinander stapeln zu können, werden drei alternative konstruktive Ausgestaltungen vorgeschlagen. In einem Ausführungsbeispiel werden die Kochgeschirre des Satzes mit unterschiedlichen Neigungswinkeln der Kochgeschirrwandung ausgebildet. In den weiteren Ausführungsbeispielen haben die Wandungen der Kochgeschirre des Satzes zwar den gleichen Neigungswinkel, weisen jedoch entweder unterschiedlich dicke Böden oder unterschiedliche Übergangsradien zwischen dem Boden und der Wandung auf. Alle drei Ausführungbeispiele erfordern somit für jedes der Kochgeschirre eine gesonderte Ausführungs-Form, um ein klemmfreies Stapeln zu ermöglichen.

Der Erfindung liegt die Aufgabe zugrunde, einen Kochgeschirrsatz bereitzustellen, dessen Kochgeschirre trotz einfacher Herstellung zuverlässig klemmfrei zu stapeln sind.

Die Aufgabe wird durch die im Anspruch 1 angegebenen Merkmale gelöst.

Der erfindungsgemäß vorgesehene, eingezogene Wandbereich an mindestens demjenigen Kochgeschirr, das in ein anderes Kochgeschirr des Satzes eingestellt werden soll, erlaubt ein klemmfreies Stapeln der Kochgeschirre mit gleichem Öffnungsdurchmesser. Durch die zweckmäßige Anpassung der Höhe des eingezogenen, ersten Wandbereiches wird sichergestellt, daß auch beim erfindungsgemäßen Kochgeschirrsatz die Böden der aufeinander stehenden Kochgeschirre aneinander anliegen. Dadurch wird einerseits die maximal niedrigste Stapelhöhe und andererseits eine kippsichere Stapelung erreicht. Die Kochgeschirre eines Satzes unterscheiden sich im wesentlichen lediglich durch ihre Gesamthöhe und die Höhe des ersten Wandbereiches, sowie gegebenenfalls dem Durchmesser des ersten Wandbereiches, falls mehr als zwei Kochgeschirre ineinander gestapelt werden sollen. Diese Änderungen sind jedoch herstellungstechnisch wesentlich weniger aufwendig zu realisieren als Änderungen in der Wandungsneigung, oder der Bodenstärke, wobei letztere zusätzlich noch die Kocheigenschaften der Kochgeschirre beeinflussen würde.

Die erfindungsgemäße Ausgestaltung kann nach Anspruche 2 auch bei Kochgeschirrsätzen mit mehr als zwei Kochgeschirren eingesetzt werden.

Durch diese Ausgestaltung können die Kochgeschirre des Satzes auf einfache Weise tiefgezogen werden, wobei Anspruch 3 eine besonders bevorzugte Querschnittsform beschreibt.

Durch die erfindungsgemäße Ausgestaltung der Kochgeschirre ist es gemäß Anspruch 4 möglich, fr alle Kochgeschirre eines Satzes Böden der gleichen Abmessung einzusetzen.

Die Ansprüche 5 und 6 beschreiben weitere konstruktive Ausgestaltungen.

Ein Ausfhürungsbeispiel der Erfindung wird nachfolgend anhand der Zeichnungen näher erläutert. Es zeigen:
- **Figur 1**: eine schematische Darstellung eines ersten Kochgeschirrs eines Kochgeschirrsatzes,
- **Figur 2**: eine schematische Darstellunge eines zweiten Kochgeschirrs eines Kochgeschirrsatzes, und
- **Figur 3**: ein schematischer Teilquerschnitt durcch einen Kochgeschirrsatz mit drei Kochgeschirren.

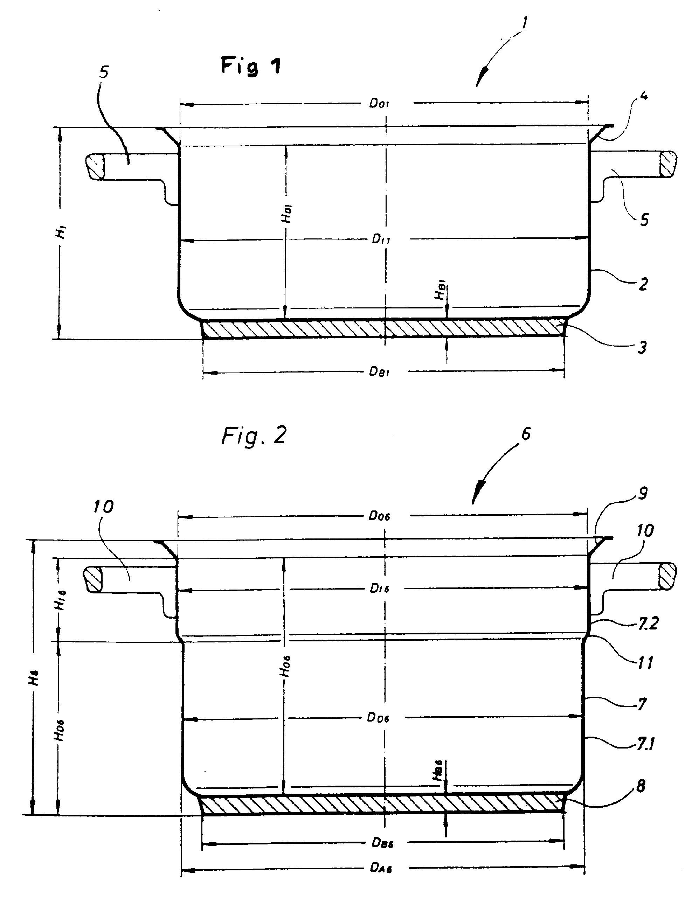

Figur 1 zeigt ein erstes Kochgeschirr eines Satzes in Form eines Kochtopfes 1, der eine zylindrische Wandung 2 mit kreisförmigem Querschnitt, einen als Wärmeverteilplatte ausgebildeten Boden 3 und einen unter einem Winkel von 45° nach außen abgebogenen, oberen Rand 4 aufweist. Außen an der Wandung 2 sind zwei handelsübliche Griffe 5 befestigt. Im Bereich des oberen Randes weist der Kochtopf 1 eine öffnungsweite mit einem Durchmesser D_{O1} auf, der der Innenweite, ausgedrückt durch den Innendurchmesser D_{I1} entspricht. Der Boden 3 hat eine Dicke H_{B1} und einen normgemäß an den Öffnungsdurchmesser D_{O1} angepaßten Durchmesser D_{B1}. Der Kochtopf 1 ist relativ niedrig und weist eine Höhe H₁ auf.

In Figur 2 ist ein zweites Kochgeschirr des Satzes dargestellt, das ebenfalls als Kochtopf 6 mit einer kreiszylindrischen Wandung 7, einem Boden 8, einem abgewinkelten, oberen Rand 9 und zwei gegenüberliegenden Griffen 10 versehen ist. Der Rand 9 und die Griffe 10 entsprechen dem Rand 4 und den Griffen 5 des Kochtopfes 1.

Der Boden 8 des Kochtopfes 6 weist einen Durchmesser D_{B6} und eine Dicke H_{B6} auf, die dem Durchmesser D_{B1} und der Dicke H_{B1} des Bodens 3 des Kochtopfes 1 entsprechen. Auch die Öffnungsweite D_{O6} des Kochtopfes 6 entspricht der Öffnungsweite D_{O1} des Kochtopfes 1.

Die Wandung 7 des Kochtopfes 6 weist einen sich an den Boden anschließenden, ersten Wandungsbereich 7.1 und einen zweiten, sich an den Rand 9 anschließenden Wandungsbereich 7.2 auf. Die Wandungsbereiche 7.1 und 7.2 sind über einen Übergangsbereich 11 miteinander verbunden, wobei der Übergangsbereich 11 zweckmäßigerweise in gleicher Weise abgewinkelt ist, wie der Rand 9. Der zweite, obere Wandungsbereich 7.2 hat einen Innendurchmesser D_{I6}, der der Öffnungsweite D_{O6} und somit der Innenweite D_{I1} und der Öffnungsweite D_{O1} des Kochtopfes 1 entspricht. Der erste, untere Wandungsbereich 7.1 hat einen Außendurchmesser D_{A6}, der kleiner als der Innendurchmesser D_{I1} des Kochtopfes 1 ist.

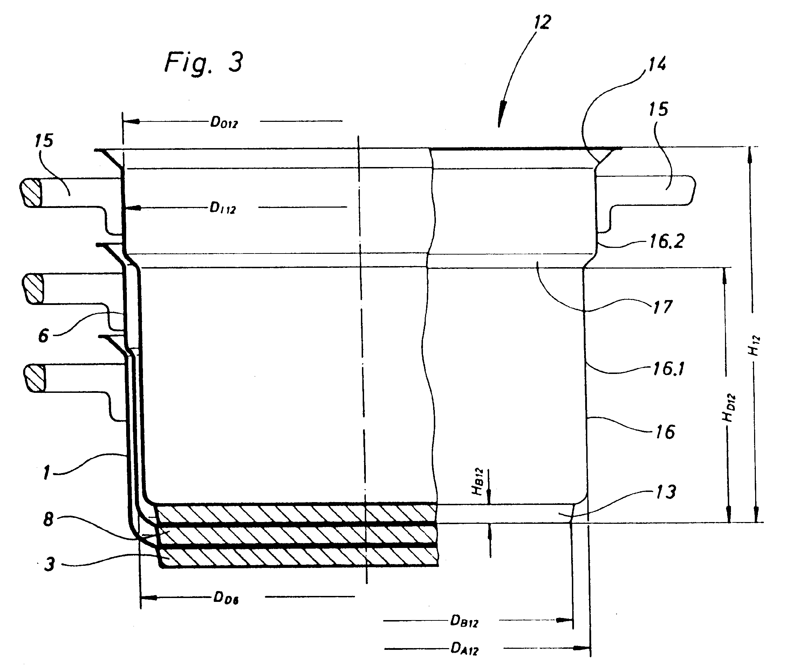

Die Höhe H₆ des Kochtopfes 6 ist größer als die Höhe H₁ des Kochtopfes 1, wobei die Höhe H_{D6} des ersten Wandungsbereiches 7.1 des Kochtopfes 6 derart auf die Höhe H₁ des Kochtopfes 1 sowie die Bodendicke H_{B6} des Bodens 8 des Kochtopfes 6 abgestimmt ist, daß beim Einstellen des Kochtopfes 6 in den Kochtopf 1 (vergl. auch Fig. 3) der Übergangsbereich 11 des Kochtopfes 6 sich in Höhe des oberen Randes 4 des Kochtopfes 1 befindet. Der zweite Wandungsbereich 7.2 ragt dabei mit seiner Höhe H_{D6} über den Kochtopf 1 hinaus. Da die Griffe 10 am zweiten Wandungsbereich 7.2 angeordnet sind, stören sie beim Stapeln nicht.

Wie Figur 3 zeigt, lassen sich die Kochtöpfe 1 und 6 derart ineinander stellen, daß der Boden 8 des Kochtopfes 6 vollflächig auf dem Boden 3 des Kochtopfes 1 aufsteht.

Bei Bedarf kann der Kochgeschirrsatz auch noch einen dritten Kochtopf 12 sowie nicht gezeichnete weitere Kochgeschirre, die analog des Kochtopfes 12 ausgebildet werden können, aufweisen. Der Kochtopf 12 weist wiederum einen Boden 13 auf, dessen Abmessungen den Abmessungen der Böden 3 und 8 der Kochtöpfe 1 und 6 entsprechen. Auch ein oberer Rand 14 des Kochtopfes 12 und Handgriffe 15 sind den entsprechenden Bauteilen der Kochtöpfe 1 und 6 gleich. Der Kochtopf 12 weist weiterhin die gleiche Öffnungsweite D_{O12} wie die Kochgeschirre 1 und 6 auf. Er hat eine im wesentlichen zylindrische Wandung 16, die einen eingezogenen, unteren, ersten Wandungsbereich 16.1 und einen zweiten Wandungsbereich 16.2 aufweist, die über einen Übergangsbereich 17 miteinander verbunden sind. Der äußere Durchmesser D_{A12} des eingezogenen, ersten Wandungsbereiches 16.1 ist kleiner als der Innendurchmesser D_{D6} des Kochtopfes 6. Die Höhe H_{D12} des ersten Wandungsbereiches 16.1 ist derart auf die Höhe H_{O6} des Kochtopfes 6 abgestimmt, daß der bergangsbereich 17 in der Nähe des oberen Randes 9 des Kochtopfes 6 zu liegen kommt, wenn der Kochtopf 12 in den Kochtopf 6 derart eingestellt wird, daß der Boden 13 auf dem Boden 8 aufsteht.

Mit der in Figur 3 beschriebenen Reihenfolge des Ineinandersetzens der Kochgeschirre 1, 6 und 12 wird die geringstmögliche Stapelhöhe erreicht. Es ist jedoch auch möglich, beispielsweise den Kochtopf 6 in den Kochtopf 12 einzusetzen. In diesem Fall wird der ersten Wandungsbereich 7.1 des Kochtopfes 6 so weit in den Kochtopf 12 eingesetzt, bis die Anschlußrundung zwischen dem Boden 8 und der Wandung 7 auf dem Übergangsbereich 17 des Kochtopfes 12 aufsitzt. Auch dann ist ein sicheres Stapeln gewährleistet, obwohl bei dieser Reihenfolge der Boden des zweiten Kochtopfes nicht auf dem Boden des dritten Kochtopfes aufliegt. Um weitere Varianten in der Stapelbarkeit der Kochtöpfe 1, 6 und 12 zu ermöglichen, kann auch der Kochtopf 1 einen eingezogenen, jedoch nicht gezeichneten, Wandungsbereich aufweisen. Durch die übereinstimmende Abwinkelung der Übergangsbereiche 11, 17 und der oberen Ränder 4, 9, 14 ist es weiterhin möglich, auch weitere, nicht gezeichnete Kochgeschirre in einer von der vorgegebenen Reihenfolge, groß in klein, abweichenden Reihenfolge zu stapeln, indem beispielsweise ein Kochgefäß mit geringer Höhe des ersten Wandungsbereichs in ein Kochgefäß mit größerer Höhe des zweiten Wandungsbereiches eingestellt wird, wobei sich der Übergangsbereich des inneren Kochgefäßes auf dem oberen Rand des äußeren Kochgefäßes abstützt.

In Abwandlung des beschriebenen und gezeichneten Ausführungsbeispiels können statt oder zusätzlich zu den beschriebenen Kochtöpfen auch Pfannen, Schüsseln oder dergleichen mit den eingezogenen Wandungsbereichen zum Stapeln versehen werden. Die Erfindung ist auch für Kochgeschirre mit von der Zylinderform abweichenden Wandungen oder Querschnitten, beispielsweise geneigten Wandungen oder ovalen bzw. rechteckigen Querschnitten, einsetzbar.

## Patentansprüche

1. Kochgeschirrsatz mit einem ersten und einem zweiten Kochgeschirr (1, 6) gleicher ffnungsweiten (Dₒ₁ Dₒ₆), die jeweils einen Boden (3, 8), eine Wandung (2, 7) und einen oberren Rand (4, 9) aufweisen, wobei das zweite Kochgeschirr (6) höher als der erste Kochgeschirr (1) ist und zum Aufbewahren in das erste, niedrigere Kochgeschirr (1) derart einsetzbar ist, daß der Boden (8) des zweiten Kochgeschirres (6) auf dem Boden (3) des ersten Kochgeschirres (1) aufliegt, **dadurch gekennzeichnet,** daß sich die Wandungen (2,7) der Kochgeschirre (1,6) sentrecht zum Boden (3,8) erstrecken, und daß das zweite Kochgeschirr (6) einen sich an den boden (8) anschließenden ersten Wandungsbereich (7.1) einen Übergangsbereich (11) und einen sich an den oberen Rand (4) anschließenden, zweiten Wandungsbereich (7.2) aufweist, wobei die Außenweite (D_{A6}) des ersten Wandungsbereiches (7.1) gegenüber der Außenweite des zweiten Wandungsbereiches (7.2) eingezogen und kleiner ist als die Innenweite (D_{I1}) des ersten Kochgeschirres (1), und die Höhe (H_{D6}) des ersten Wandungsbereiches (1.1) des zweiten Kochgeschirres (6) derart auf die Höhe (H₀₁) des ersten Kochgeschirres (1) abgestimmt ist, daß der Boden (8) des zweiten Kochgeschirres (6) beim Ineinanderstapeln auf den Boden (3) des ersten Kochgeschirres (1) aufsetzbar ist.

2. Kochgeschirrsatz nach Anspruch 1, **dadurch** **gekennzeichnet**, daß drei Kochgeschirre (1, 6, 12) gleicher Öffnungsweite vorgesehen sind, wobei auch das dritte Kochgeschirr (12) mit einem Boden (13), einen oberen Rand (14) sowie einer Wandung (16) mit einem eingezogenen ersten und einem zweiten Wandungsbereich (16.1, 16,2) sowie einem Übergangsbereich versehen ist, daß sich die Wandung (16) des dritten Kochgeschirrs (12) senkrecht zum Boden (13) erstreckt, daß das dritte Kochgeschirr (12) höher ist als das zweite Kochgeschirr (6), die Außenweite (D_{A12}) des ersten Wandungsbereiches (16.1) des dritten Kochgeschirres (12) kleiner ist als die Innenweite (D_{D6}) des ersten Wandungsbereiches (7.1.) des zweiten Kochgeschirres und die Höhe (H_{D12}) des ersten Wandungsbereiches (16.1) des dritten Kochgeschirres (12) derart auf die Höhe (H_{D6}) des ersten Wandungsbereiches (7.1) des zweiten Kochgeschirres (6) abgestimmt ist, daß der Boden (13) des dritten Kochgeschirres (12) beim Ineinanderstapeln auf den Boden des zweiten Kochgeschirres (6) aufsetzbar ist.

3. Kochgeschirrsatz nach einem der Ansprüche 1 bis 2, **dadurch gekennzeichnet,** daß die Wandungen (2, 7, 16) der Kochgeschirre (1, 6, 12) eine kreiszylindrische Form aufweisen.

4. Kochgeschirrsatz nach einem der Ansprüche 1 bis 3, **dadurch gekennzeichnet**, daß die Böden (3, 8, 13) der Kochgeschirre (1, 6,12) im wesentlichen die gleiche Dicke (H_{B1}, H_{B6}, H_{B12}) und den gleichen Durchmesser (D_{B1}, D_{B6}, D_{B12}) aufweisen.

5. Kochgeschirrsatz nach einem der Ansprüche 1 bis 4, **dadurch gekennzeichnet,** daß auch das erste Kochgeschirr (1) einen eingezogenen, ersten Wandungsbereich mit einem gegenber einem zweiten Wandungsbereich verkleinerter Außenweite aufweist.

6. Kochgeschirrsatz nach einem der Ansprüche 1 bis 5, **dadurch gekennzeichnet,** daß die äußere Form des Übergangsbereiches (11, 17) an die innere Form des oberen Randes (4, 9, 14) angepaßt ist.

## Claims

1. Set of cooking vessels with first and second cooking vessels (1, 6) with the same opening widths (D₀₁, D₀₆), which each comprise a bottom (3, 8), a wall (2, 7) and an upper edge (4, 9), wherein the second cooking vessel (6) is higher than the first cooking vessel (1) and for storage can be inserted in the first, lower cooking vessel (1) in such a way that the bottom (8) of the second cooking vessel (6) rests on the bottom (3) of the first cooking vessel (1), characterised in that the walls (2, 7) of the cooking vessels (1, 6) extend perpendicularly to the bottom (3, 8), and in that the second cooking vessel (6) comprises a first wall region (7.1) adjoining the bottom (8), a transition region (11) and a second wall region (7.2) adjoining the upper edge (4), wherein the outside width (D_{A6}) of the first wall region (7.1) is reduced in comparison with the outside width of the second wall region (7.2) and is smaller than the inside width (D_{I1}) of the first cooking vessel (1), and the height (H_{D6}) of the first wall region (1.1) of the second cooking vessel (6) is coordinated with the height (H₀₁) of the first cooking vessel (1) in such a way that the bottom (8) of the second cooking vessel (6) during stacking can be placed on the bottom (3) of the first cooking vessel (1).

2. Set of cooking vessels according to claim 1, characterised in that three cooking vessels (1, 6, 12) with the same opening width are provided, wherein the third cooking vessel (12) is also provided with a bottom (13), an upper edge (14) as well as a wall (16) with a reduced first and a second wall region (16.1, 16.2) as well as a transition region, in that the wall (16) of the third cooking vessel (12) extends perpendicularly to the bottom (13), in that the third cooking vessel (12) is higher than the second cooking vessel (6), the outside width (D_{A12}) of the first wall region (16.1) of the third cooking vessel (12) is smaller than the inside width (D_{D6}) of the first wall region (7.1) of the second cooking vessel and the height (H_{D12}) of the first wall region (16.1) of the third cooking vessel (12) is coordinated with the height (H_{D6}) of the first wall region (7.1) of the second cooking vessel (6) in such a way that the bottom (13) of the third cooking vessel (12) during stacking can be placed on the bottom of the second cooking vessel (6).

3. Set of cooking vessels according to either of claims 1 to 2, characterised in that the walls (2, 7, 16) of the cooking vessels (1, 6, 12) have a circular cylindrical shape.

4. Set of cooking vessels according to any of claims 1 to 3, characterised in that the bottoms (3, 8, 13) of the cooking vessels (1, 6, 12) have essentially the same thickness (H_{B1}, H_{B6}, H_{B12}) and the same diameter (D_{B1}, D_{B6}, D_{B12}).

5. Set of cooking vessels according to any of claims 1 to 4, characterised in that the first cooking vessel (1) also comprises a reduced first wall region with a smaller outside width than a second wall region.

6. Set of cooking vessels according to any of claims 1 to 5, characterised in that the outer shape of the transition region (11, 17) is adapted to the inner shape of the upper edge (4, 9, 14).

## Revendications

1. Ensemble de récipients de cuisson avec un premier et un deuxième récipients de cuisson (1, 6) de mêmes largeurs d'ouverture (D₀₁, D₀₆), qui présentent chacun un fond (3, 8), une paroi (2, 7) et un rebord supérieur (4, 9), le deuxième récipient de cuisson (6) étant plus haut que le premier récipient de cuisson (1) et étant propre à être logé, pour le rangement, dans le premier récipient de cuisson (1), moins haut, de telle manière que le fond (8) du deuxèime récipient de cuisson (6) repose sur le fond (3) du premier récipient de cuisson (1), caractérisé en ce que les parois (2, 7) des récipients de cuisson (1, 6) s'étendent perpendiculairement aux fonds (3, 8) et en ce que le deuxième récipient de cuisson (6) présente une première zone de paroi (7.1) faisant suite au fond (8), une zone de transition (11) et une seconde zone de paroi (7.2) se raccordant au rebord supérieur (4), la largeur extérieure (D_{A6}) de la première zone de paroi (7.1) étant rétrécie par rapport la largeur extérieure de la seconde zone de paroi (7.2) et étant plus petite que la largeur intérieure (D_{I1}) du premier récipient de cuisson (1), et la hauteur (H_{D6}) de la première zone de paroi (7.1) du deuxième récipient de cuisson (6) étant adaptée la hauteur (H₀₁) du premier récipient de cuisson (1) de telle manière que le fond (8) du deuxime récipient de cuisson (6) puisse être posé sur le fond (3) du premier récipient de cuisson (1) lors de leur empilage par emboîtement l'un dans l'autre.

2. Ensemble de récipients de cuisson selon la revendication 1, caractérisé en ce qu'il est prévu trois récipients de cuisson (1, 6, 12) de même largeur d'ouverture, le troisèime récipient de cuisson (12) étant également pourvu d'un fond (13), d'un rebord supérieur (14) ainsi que d'une paroi (16) avec une première zone de paroi rétrécie et une seconde zone de paroi (16.1, 16.2) ainsi qu'avec une zone de transition, en ce que la paroi (16) du troisième récipient de cuisson (12) s'étend perpendiculairement au fond (13), en ce que le troisième récipient de cuisson (12) est plus haut que le deuxième récipient de cuisson (6), en ce que la largeur extérieure (D_{A12}) de la première zone de paroi (16.1) du troisième récipient de cuisson (12) est plus petite que la largeur intérieure (D_{D6}) de la première zone de paroi (7.1) du deuxième récipient de cuisson et en ce que la hauteur (H_{D12}) de la première zone de paroi (16.1) du troisième récipient de cuisson (12) est adaptéé la hauteur (H_{D6}) de la première zone de paroi (7.1) du deuxième récipient de cuisson (6) de telle manière que le fond (13) du troisième récipient de cuisson (12) puisse être posé sur le fond du deuxième récipient de cuisson (6) lors de leur empilage par emboîtement l'un dans l'autre.

3. Ensemble de récipients de cuisson selon l'une des revendications 1 et 2, caractérisé en ce que les parois (2, 7, 16) des récipients de cuisson (1, 6, 12) présentent une forme cylindrique circulaire.

4. Ensemble de récipients de cuisson selon l'une des revendications 1 à 3, caractérisé en ce que les fonds (3, 8, 13) des récipients de cuisson (1, 6, 12) présentent sensiblement la même épaisseur (H_{B1}, H_{B6}, H_{B12}) et le même diamètre (D_{B1}, D_{B6}, D_{B12}).

5. Ensemble de récipients de cuisson selon l'une des revendications 1 à 4, caractérisé en ce que le premier récipient de cuisson (1) présente également une première zone de paroi rétrécie avec une largeur extérieure réduite par rapport une deuxième zone de paroi.

6. Ensemble de récipients de cuisson selon l'une des revendications 1 à 5, caractérisé en ce que la forme extérieure de la zone de transition (11, 17) est adapte la forme intérieure du rebord supérieur (4, 9, 14).
